# FASCICULE DE BREVET EUROPEEN

(11) **EP 2 633 686 B1**
(45) Date de publication et mention de la délivrance du brevet: **25.03.2020**
(21) Numéro de dépôt: 11785727.6
(22) Date de dépôt: 18.10.2011
(51) Int. Cl.: H04N 19/33, H04N 19/105, H04N 19/187, H04N 19/176, H04N 19/192, H04N 19/46

(54) **CODAGE VIDEO ECHELONNABLE A PARTIR D'UN EPITOME HIERARCHIQUE**
SKALIERBARE VIDEOKODIERUNG MIT EINEM HIERARCHISCHEN EPITOM
SCALABLE VIDEO ENCODING USING A HIERARCHICAL EPITOME

(30) Priorité: 25.10.2010 FR 1058750
(43) Date de publication de la demande: 04.09.2013
(73) Titulaire: Orange, 75015 Paris (FR)
(72) Inventeur: AMONOU, Isabelle, F-35510 Cesson Sevigne (FR)
(74) Mandataire: Vidon Brevets & Stratégie
(86) Numéro de dépôt international: PCT/FR2011/052433
(87) Numéro de publication internationale: WO 2012/056148

(56) Documents cités:
- US-A1- 2009 208 110
- QIJUN WANG ET AL: "Spatially Scalable Video Coding Based on Hybrid Epitomic Resizing", DATA COMPRESSION CONFERENCE (DCC), 2010, IEEE, PISCATAWAY, NJ, USA, 24 mars 2010 (2010-03-24), pages 139-148, XP031661655, ISBN: 978-1-4244-6425-8
- QIJUN WANG ET AL: "Intra coding and refresh based on video epitomic analysis", MULTIMEDIA AND EXPO (ICME), 2010 IEEE INTERNATIONAL CONFERENCE ON, IEEE, PISCATAWAY, NJ, USA, 19 juillet 2010 (2010-07-19), pages 452-455, XP031761412, ISBN: 978-1-4244-7491-2
- VINCENT CHEUNG ET AL: "Video Epitomes", INTERNATIONAL JOURNAL OF COMPUTER VISION, KLUWER ACADEMIC PUBLISHERS, BO, vol. 76, no. 2, 23 décembre 2006 (2006-12-23), pages 141-152, XP019581846, ISSN: 1573-1405

## Description

### 1. Domaine de l'invention

Le domaine de l'invention est celui du codage et du décodage d'images ou de séquences d'images, et notamment de flux vidéo.

Plus précisément, l'invention concerne le codage et le décodage de flux de données échelonnables (ou « scalables »), à qualité adaptable et résolution spatio-temporelle variable.

L'invention peut notamment s'appliquer au codage/décodage vidéo mis en œuvre dans les codeurs/décodeurs de type SVC (« Scalable Video Coding »).

### 2. Art antérieur

### 2.1 Principe général du codage vidéo scalable

De nombreux systèmes de transmission de données sont aujourd'hui hétérogènes, en ce sens qu'ils desservent une pluralité de clients disposant de types d'accès aux données très divers. Ainsi, le réseau Internet, par exemple, est accessible aussi bien à partir d'un ordinateur personnel (PC) que d'un téléphone mobile. Plus généralement, la bande passante pour l'accès au réseau, les capacités de traitement des terminaux clients, la taille de leurs écrans varient fortement d'un utilisateur à l'autre. Ainsi, un premier client peut par exemple accéder au réseau Internet à partir d'un PC puissant, et disposer d'un débit ADSL (« Asymmetric Digital Subscriber Line » pour « Ligne d'abonné numérique à structure asymétrique ») alors qu'un deuxième client cherche à accéder aux mêmes données au même instant à partir d'un PDA (« Personal Digital Assistant » pour « assistant numérique personnel ») connecté à un modem de faible débit.

Pour répondre à ces différents besoins, des algorithmes de codage d'images scalables, ont été développés, permettant une qualité adaptable et une résolution spatio-temporelle variable. Selon ces techniques, le codeur génère un flux compressé présentant une structure en couches. Par exemple, une première couche de données véhicule un flux à 256 kbits/s, qui pourra être décodé par un terminal de type PDA, et une deuxième couche de données complémentaire véhicule un flux de résolution supérieure à 256 kbits/s qui pourra être décodé, en complément du premier, par un terminal plus puissant de type PC. Le débit nécessaire pour le transport de ces deux couches emboîtées est dans cet exemple de 512 kbits/s.

De tels algorithmes de codage sont ainsi très utiles pour toutes les applications pour lesquelles la génération d'un seul flux compressé, organisé en plusieurs couches de scalabilité, peut servir à plusieurs clients de caractéristiques différentes.

### 2.2 Le codeur SVC

La norme SVC, correspondant à l'amendement 3 de la norme AVC H264/MPEG-4 partie 10, définit plus particulièrement la structure des flux vidéo scalables. Un tel flux comprend une couche de base, encore appelé « base level », compatible avec la norme AVC H264/MPEG-4 partie 10, et une ou plusieurs couches de rehaussement. Les couches de rehaussement sont codées par prédiction par rapport à une couche précédente (prédiction inter-couche) et classiquement par rapport aux autres images de la séquence (prédiction intra ou temporelle classique). On rappelle que pour la prédiction inter-couches, trois types de prédictions peuvent être utilisés : prédiction des vecteurs de mouvement, prédiction des résidus issus de la prédiction, et prédiction de la texture.

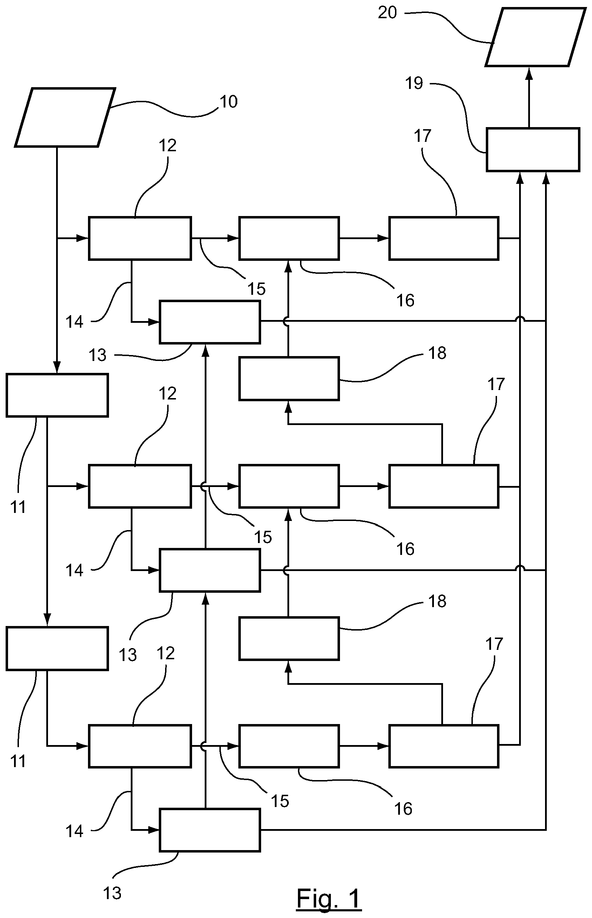

Plus précisément, la figure 1 illustre la structure d'un tel codeur SVC, présentant trois couches de résolutions spatiales différentes (un niveau de résolution de base et deux niveaux de résolution supérieure).

Les composantes d'entrée vidéo 10 au niveau de résolution le plus élevé et les composantes d'entrée vidéo sous-échantillonnées au moins une fois par décimation spatiale 2D (11)) aux niveaux de résolution inférieurs, entrent dans un module 12 mettant en œuvre des opérations de décomposition temporelle/estimation de mouvement.

Un tel module 12 alimente des modules d'estimation/compensation en mouvement 13 à partir d'informations de mouvement 14, et des modules de prédiction intra 16 à partir d'informations de texture 15.

Les données prédites, en sortie du module de prédiction intra 16, alimentent un bloc 17 de transformation et de codage entropique. Les données issues de ce bloc 17 servent notamment à réaliser une interpolation spatiale 2D (18) depuis le niveau de résolution inférieure. Finalement, un module de multiplexage 19 ordonne les différents sous-flux générés dans un flux de données compressé global 20.

En d'autres termes, la séquence d'entrée est sous-échantillonnée au moins une fois, et le codeur SVC enchaîne les étapes suivantes :
- le niveau de base est codé avec une qualité de base ;
- les niveaux de rehaussement sont codés avec une qualité supérieure ;
- les informations de texture et de mouvement sont raffinées ;
- on détermine la différence entre les différents niveaux de résolution et cette différence est encodée (codage entropique).

### 2.3 Les épitomés

Afin d'améliorer la compression des images ou séquences d'images, Q. Wang, R. Hu et Z. Wang ont proposé, dans le document « Improving Intra Coding in H.264\AVC by Image Epitome, Advances in Multimedia Information Processing », une nouvelle technique de prédiction intra pour les codeurs/décodeurs AVC, basée sur l'utilisation d'épitomés (en anglais « epitome » ou « jigsaw »).

Un épitomé est une version condensée, généralement miniature, d'une image, contenant les composantes principales de textures et de contour de cette image. La taille de l'épitomé est généralement réduite par rapport à celle de l'image d'origine, mais l'épitomé contient toujours les éléments constitutifs les plus pertinents pour la reconstruction de l'image. Comme décrit dans le document précité, l'épitomé peut être construit en utilisant une technique de type maximum de
vraisemblance a posteriori (en anglais MLE, pour « Maximum Likelihood Estimation »), associée à un algorithme de type espérance/maximisation (en anglais EM, pour « Expectation/Maximization »). Une fois que l'épitomé a été construit pour l'image, il peut être utilisé pour reconstruire (synthétiser) certaines parties de l'image.

En particulier, dans le document précité, Q. Wang et al. ont proposé de générer un épitomé de manière itérative. Une pyramide d'épitomés est ainsi réalisée, dans laquelle classiquement, l'épitomé obtenu grâce à une image de niveau inférieur au cours d'une itération sert, après interpolation, de valeur d'initialisation pour la génération de l'épitomé correspondant à l'image de niveau supérieur au cours d'une autre itération. On utilise donc l'épitomé généré à partir d'une image sous-échantillonnée pour générer l'épitomé associé à l'image dans sa version non-échantillonnée.

Malheureusement, selon cette approche, l'épitomé associé à l'image dans sa version non-échantillonnée (« haute résolution ») est construit à partir d'un épitomé « basse résolution » correspondant à une version « dégradée » de l'image, en sur-échantillonnant cet épitomé « basse résolution ». La prédiction de l'image dans sa version non-échantillonnée n'est donc pas de bonne qualité.

De plus, les épitomés obtenus aux différents niveaux de résolution peuvent être très différents. Ainsi, l'épitomé construit directement au niveau de résolution i+1 peut être très différent d'un épitomé construit au niveau de résolution i au cours d'une première itération, et sur-échantillonné au niveau de résolution i+1. La cohérence des informations entre une couche de niveau de résolution i et une couche de niveau de résolution supérieur (i+1) n'est donc pas garantie, et il n'est pas possible de prédire correctement une couche de niveau de résolution supérieur (i+1) par rapport à une couche de niveau de résolution inférieur (i). L'épitomé associé à l'image dans sa version non-échantillonnée selon cette approche ne peut donc pas être utilisé par un codeur/décodeur vidéo scalable, comme SVC.

Dans US2009/208110, une technique de compression des images est proposée dans laquelle des épitomes associés à une seule et même couche spatiale sont utilisés.

Dans Qijun Wang et al. « Spatially Scalable Video Coding based on Hybrid Epitomic Resizing", Data Compression Conference, 2010, IEEE, Piscataway, NJ, USA, 24 mars 2010, pages 139-148, propose une technique de codage scalable dans laquelle la couche de base est générée par un seul épitome.

### 3. Exposé de l'invention

L'invention est exposée dans les revendications.

L'invention propose un nouveau procédé de codage d'une séquence d'images, délivrant un signal présentant une organisation en couches comprenant au moins une couche de base et une couche de rehaussement, une couche de rehaussement correspondant à un niveau de résolution d'une image de ladite séquence supérieur au niveau de résolution d'au moins une couche
précédente, et étant codée par prédiction au moins à partir de ladite au moins une couche précédente.

Selon l'invention, un tel procédé met en œuvre, pour au moins une image courante de la séquence, une étape de construction d'un épitomé hiérarchique associé à la couche de rehaussement correspondant au niveau de résolution maximale de l'image courante, à partir :
- d'un épitomé associé à la couche de rehaussement correspondant au niveau de résolution maximale de l'image courante ; et
- d'au moins un épitomé associé à une couche précédente correspondant à un niveau de résolution inférieur au niveau de résolution maximale de l'image courante.

L'invention propose ainsi un nouvel épitomé hiérarchique multirésolution, pouvant être utilisé pour la prédiction intra couche (intra ou inter) ou inter-couches dans les codeurs/décodeurs vidéo scalables.

Selon l'invention, on génère un épitomé au niveau de résolution maximale (à partir de l'image courante), et au moins un épitomé à un niveau de résolution inférieure (à partir de l'image courante sous-échantillonnée) pour construire l'épitomé hiérarchique. On part donc de l'image au niveau de résolution le plus élevé pour construire l'épitomé hiérarchique.

Cette approche « du haut vers le bas » (« top-bottom » en anglais) permet de garantir la cohérence, et donc la prédictibilité, des informations entre les couches de différents niveaux de résolution.

Elle offre ainsi de nouveaux modes de prédiction aux codeurs/décodeurs dans un contexte multirésolution.

En particulier, plus l'épitomé hiérarchique augmente en résolution (c'est-à-dire plus le niveau de résolution maximale de l'image courante est élevé), plus il permet de prédire l'image courante avec une grande qualité et/ou résolution.

Ainsi le procédé de codage selon l'invention met en œuvre une étape de prédiction de l'image courante à partir de l'épitomé hiérarchique.

Selon un mode de réalisation particulier, l'étape de construction met en œuvre au moins une itération des étapes énumérées à la revendication 2.

En particulier, l'étape de raffinement, mise en œuvre à différents niveaux de résolution, met en œuvre une suppression d'au moins une portion de l'épitomé généré au niveau de résolution correspondant.

De cette façon, la prédiction de l'image obtenue à partir de l'épitomé raffiné est de meilleure qualité.

Selon une caractéristique particulière de l'invention, le critère de codage tient compte d'une qualité de prédiction associée aux différents niveaux de résolution et d'un coût de codage de l'épitomé hiérarchique.

On obtient de cette façon un épitomé hiérarchique offrant un bon compromis entre un codage efficace de la séquence d'images par prédiction à partir de cet épitomé aux différents niveaux de résolution et un codage efficace de l'épitomé hiérarchique lui-même.

Selon un autre aspect de l'invention, le procédé de codage comprend une étape de transmission de l'épitomé hiérarchique à au moins un décodeur destiné à décoder la séquence d'images.

Dans ce cas, les données transmises restent compactes, puisque l'épitomé est une version condensée d'une image.

De plus, le décodeur peut alors utiliser cet épitomé hiérarchique comme image de référence pour sa prédiction inter-images.

Selon encore un autre aspect, l'épitomé hiérarchique est déterminé à partir d'un ensemble d'au moins deux images de la séquence.

Un tel épitomé hiérarchique est construit à partir de plusieurs images de la séquence, et est donc représentatif d'une partie de la séquence. L'invention permet ainsi de prédire plus efficacement l'image courante à partir de cet épitomé hiérarchique.

En particulier, l'image courante et l'ensemble d'images utilisé pour construire l'épitomé hiérarchique appartiennent à une même sous-séquence de la séquence. Par exemple, une telle sous-séquence appartient au groupe comprenant :
- un même plan d'images ;
- un GOP (en anglais « Group Of Pictures » pour groupe d'images), comprenant par exemple des images de type P et B localisées entre deux images de type I selon l'ordre de codage de la séquence, tel que défini selon les normes H263, MPEG2, etc ;

L'ensemble d'images utilisé pour construire l'épitomé hiérarchique peut également être une liste d'images de référence de l'image courante, définie par exemple selon les normes MPEG4, H.264, etc.

Dans un autre mode de réalisation, l'invention concerne un dispositif de codage d'une séquence d'images, délivrant un signal présentant une organisation en couches comprenant au moins une couche de base et une couche de rehaussement, une couche de rehaussement correspondant à un niveau de résolution d'une image de la séquence supérieur au niveau de résolution d'au moins une couche précédente, et étant codée par prédiction au moins à partir de ladite au moins une couche précédente.

Selon l'invention, un tel dispositif comprend des moyens de construction d'un épitomé hiérarchique associé à la couche de rehaussement correspondant au niveau de résolution maximale d'une image courante de la séquence, à partir :
- d'un épitomé associé à la couche de rehaussement correspondant au niveau de résolution maximale de l'image courante ; et
- d'au moins un épitomé associé à une couche précédente correspondant à un niveau de résolution inférieur au niveau de résolution maximale de l'image courante.

Un tel codeur est notamment adapté à mettre en œuvre le procédé de codage décrit précédemment. Il s'agit par exemple d'un codeur vidéo SVC. Ce dispositif de codage pourra bien sûr comporter les différentes caractéristiques relatives au procédé de codage selon l'invention. Ainsi, les caractéristiques et avantages de ce codeur sont les mêmes que ceux du procédé de codage, et ne sont pas détaillés plus amplement.

L'invention concerne également un signal représentatif d'une séquence d'images codée selon le procédé de codage décrit ci-dessus, présentant une organisation en couches comprenant au moins une couche de base et une couche de rehaussement, une couche de rehaussement correspondant à un niveau de résolution d'une image de la séquence supérieur au niveau de résolution d'au moins une couche précédente, et étant codée par prédiction au moins à partir de la au moins une couche précédente.

Selon l'invention, un épitomé hiérarchique associé à la couche de rehaussement correspondant au niveau de résolution maximale d'au moins une image courante de la séquence étant construit à partir :
- d'un épitomé associé à la couche de rehaussement correspondant au niveau de résolution maximale de l'image courante ; et
- d'au moins un épitomé associé à une couche précédente correspondant à un niveau de résolution inférieur au niveau de résolution maximale de l'image courante ;
le signal porte au moins un indicateur signalant une utilisation de l'épitomé hiérarchique pour prédire l'image courante et/ou une présence de l'épitomé hiérarchique dans le signal.

Ainsi, un tel indicateur permet d'indiquer au décodeur le mode de prédiction utilisé, et s'il peut lire l'épitomé hiérarchique dans le signal, ou s'il doit le reconstruire.

Ce signal pourra bien sûr comporter les différentes caractéristiques relatives au procédé de codage selon l'invention.

L'invention concerne également un support d'enregistrement portant un signal tel que décrit précédemment.

Un autre aspect de l'invention concerne un procédé de décodage d'un signal représentatif d'une séquence d'images présentant une organisation en couches comprenant au moins une couche de base et une couche de rehaussement, une couche de rehaussement correspondant à un niveau de résolution d'une image de la séquence supérieur au niveau de résolution d'au moins une couche précédente, et étant codée par prédiction au moins à partir de ladite au moins une couche précédente.

Selon l'invention, un tel procédé de décodage met en œuvre, pour au moins une image à reconstruire de la séquence, une étape d'obtention d'un épitomé hiérarchique associé à la couche de rehaussement correspondant au niveau de résolution maximale de l'image à reconstruire, ledit épitomé hiérarchique étant construit au codage à partir :
- d'un épitomé associé à la couche de rehaussement correspondant au niveau de résolution maximale de l'image à reconstruire; et
- d'au moins un épitomé associé à une couche précédente correspondant à un niveau de résolution inférieur au niveau de résolution maximale de l'image à reconstruire,
et transmis dans le signal,
ou bien étant reconstruit au décodage.

L'invention permet ainsi de retrouver l'épitomé hiérarchique au niveau du décodeur, et de prédire l'image à reconstruire à partir de cet épitomé hiérarchique. Elle propose donc un nouveau mode de prédiction.

Un tel procédé de décodage est notamment adapté à décoder une séquence d'images codée selon le procédé de codage décrit ci-dessus. Les caractéristiques et avantages de ce procédé de décodage sont donc les mêmes que ceux du procédé de codage, et ne sont pas détaillés plus amplement.

En particulier, selon un premier mode de réalisation, l'étape d'obtention met en œuvre une reconstruction de l'épitomé hiérarchique. Le procédé de décodage met alors en œuvre la même étape de construction qu'au codage. L'épitomé hiérarchique n'est donc pas transmis dans le signal, ce qui permet d'améliorer la qualité des données (qui peuvent être prédites à partir d'un épitomé plus volumineux), et la compacité des données transmises.

On note que pour être reconstruit au décodeur, l'épitomé hiérarchique doit avoir été construit au codeur uniquement sur la base d'informations causales.

Selon un deuxième mode de réalisation, l'épitomé hiérarchique est construit au codage et transmis dans le signal, et l'étape d'obtention met en œuvre une étape de lecture de l'épitomé hiérarchique dans le signal.

En variante, pour le décodage d'au moins une image suivant l'image à reconstruire selon un ordre de décodage de la séquence, le procédé de décodage comprend une étape de mise à jour de l'épitomé hiérarchique à partir d'un épitomé hiérarchique complémentaire transmis dans le signal.

Selon un autre aspect de l'invention, le procédé de décodage comprend une étape de prédiction de l'image à reconstruire à partir de l'épitomé hiérarchique.

Dans un autre mode de réalisation, l'invention concerne un dispositif de décodage d'un signal représentatif d'une séquence d'images présentant une organisation en couches comprenant au moins une couche de base et une couche de rehaussement, une couche de rehaussement correspondant à un niveau de résolution d'une image de la séquence supérieur au niveau de résolution d'au moins une couche précédente, et étant codée par prédiction au moins à partir de ladite au moins une couche précédente.

Selon l'invention, un tel dispositif comprend des moyens d'obtention d'un épitomé hiérarchique associé à la couche de rehaussement correspondant au niveau de résolution maximale d'une image à reconstruire de la séquence,
ledit épitomé hiérarchique étant construit au codage à partir :
- d'un épitomé associé à la couche de rehaussement correspondant au niveau de résolution maximale de l'image à reconstruire; et
- d'au moins un épitomé associé à une couche précédente correspondant à un niveau de résolution inférieur au niveau de résolution maximale de l'image à reconstruire,
et transmis dans le signal,
ou bien étant reconstruit au décodage.

Un tel décodeur est notamment adapté à mettre en œuvre le procédé de décodage décrit précédemment. Il s'agit par exemple d'un décodeur vidéo de type SVC.

Ce dispositif de décodage pourra bien sûr comporter les différentes caractéristiques relatives au procédé de décodage selon l'invention.

L'invention concerne encore un programme d'ordinateur comportant des instructions pour la mise en œuvre d'un procédé de codage et/ou d'un procédé de décodage tels que décrits précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1, décrite en relation avec l'art antérieur, illustre la structure d'un codeur classique de type SVC ;
- la figure 2 illustre les principales étapes pour la construction d'un épitomé hiérarchique selon l'invention ;
- les figures 3 et 4 présentent respectivement les principales étapes mises en œuvre par un codeur ou un décodeur selon un mode de réalisation particulier de l'invention ;
- les figures 5 et 6 présentent les structures simplifiées d'un codeur et d'un décodeur selon un mode de réalisation particulier de l'invention.

### 5. Description d'un mode de réalisation de l'invention

### 5.1 Principe général

Le principe général de l'invention repose sur la construction d'au moins un épitomé spécifique, pouvant être utilisé pour une prédiction multirésolution des images dans un contexte de codage/décodage à différents niveaux de résolution. Un tel épitomé est donc « scalable », « hiérarchique », ou encore « multirésolution ».

Plus précisément, pour au moins une image courante d'une séquence d'images, l'épitomé hiérarchique est associé à la couche de rehaussement correspondant au niveau de résolution maximale d'une image courante à coder/décoder, et construit à partir :
- d'un épitomé associé à la couche de rehaussement correspondant au niveau de résolution maximale de l'image courante ; et
- d'au moins un épitomé associé à une couche précédente correspondant à un niveau de résolution inférieur au niveau de résolution maximale de l'image courante.

On génère donc un épitomé au niveau de résolution maximale (à partir de l'image courante dans sa version d'origine, c'est-à-dire non échantillonnée), et au moins un épitomé à un niveau de résolution inférieure (à partir de l'image courante sous-échantillonnée) pour construire l'épitomé hiérarchique. L'épitomé hiérarchique est donc déterminé selon une approche multirésolution.

L'épitomé hiérarchique ainsi construit peut être utilisé pour réaliser une prédiction intra ou inter au sein d'une même couche, ou une prédiction inter-couches, au niveau d'un codeur ou d'un décodeur de type SVC par exemple. Plus l'épitomé augmente en résolution (c'est-à-dire plus le niveau de résolution maximale de l'image courante est élevé), plus il permet de prédire l'image courante avec une grande qualité et/ou résolution.

Au contraire, on rappelle que les épitomés générés selon les techniques de l'art antérieur ne permettent pas de réaliser un décodage hiérarchique (c'est-à-dire dans un contexte de type SVC). En effet, il est seulement prévu selon l'art antérieur de transmettre un épitomé à un niveau de résolution donnée, et d'utiliser cet épitomé dans un contexte de prédiction intra monorésolution.

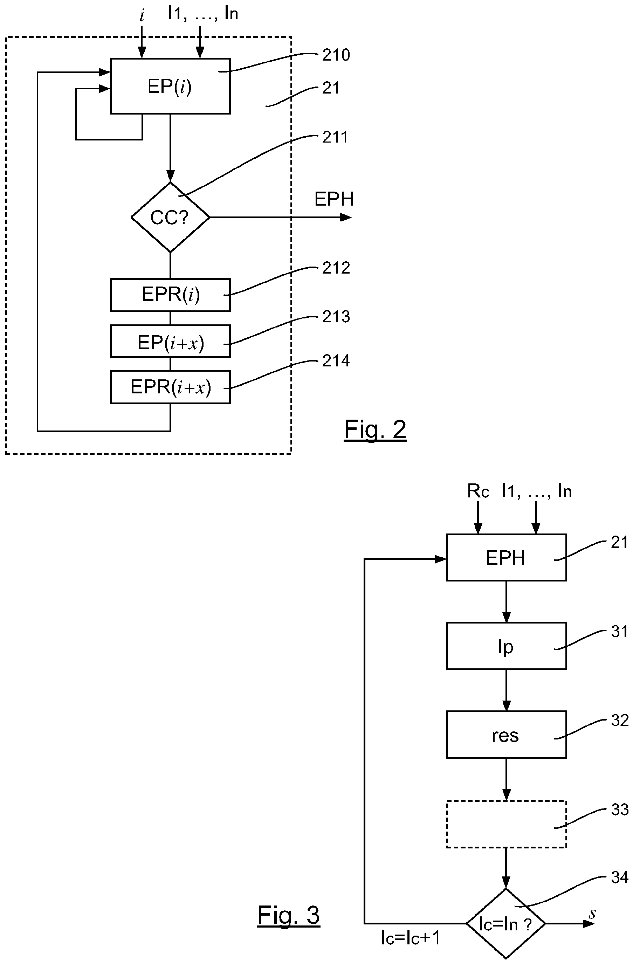

Les principales étapes mises en œuvre pour la construction d'un épitomé hiérarchique selon un mode de réalisation de l'invention sont notamment illustrées en figure 2.

Plus précisément, selon ce mode de réalisation, l'étape de construction 21 met en œuvre au moins une itération des étapes suivantes :
- au moins un sous-échantillonnage 210 de l'épitomé au niveau de résolution supérieure, de façon à obtenir un épitomé à un niveau de résolution inférieure EP(i) ;
- vérification 211 d'un critère de codage CC :
   ∘ si le critère de codage CC n'est pas atteint :
      ▪ raffinement 212 de l'épitomé à un niveau de résolution inférieure, délivrant un épitomé raffiné au niveau de résolution inférieure EPR(i) ;
      ▪ au moins un sur-échantillonnage 213 de l'épitomé raffiné au niveau de résolution inférieure, délivrant un nouvel épitomé à un niveau de résolution supérieure EP(i+x) ;
      ▪ raffinement 214 de l'épitomé au niveau de résolution supérieur, délivrant un épitomé raffiné EPR(i+x) ;
   ∘ si le critère de codage est atteint :
      ▪ obtention de l'épitomé hiérarchique EPH, correspondant à l'épitomé au niveau de résolution maximale obtenu après raffinement, et arrêt des itérations.

On note que pour la première itération, le niveau de résolution supérieure est le niveau de résolution maximale.

L'étape de construction 21 d'un épitomé hiérarchique selon la figure 2 peut notamment être mise en œuvre dans un codeur ou un décodeur de type SVC. L'invention propose alors d'utiliser un épitomé hiérarchique pour encoder une séquence d'images au format SVC.

### 5.2 Fonctionnement du codeur

On présente ci-après, en relation avec la figure 3, un exemple des principales étapes mises en œuvre dans un codeur de type SVC à deux niveaux de résolution spatiale.

On considère ainsi un codeur vidéo recevant en entrée une séquence d'images I1 à In, ainsi qu'un niveau de résolution maximal. Par exemple, on considère deux niveaux de résolution spatiale : le niveau i, correspondant au niveau de résolution maximale (haute définition HD en télévision numérique par exemple), et le niveau i-1, correspondant à un niveau de résolution inférieur (définition standard SD en télévision numérique par exemple). On considère également que la séquence d'entrée est sous-échantillonnée, conformément à l'architecture du codeur SVC telle que décrite en figure 1.

On cherche selon l'invention à construire un épitomé hiérarchique qui pourra être avantageusement encodé par un codeur SVC et servira de prédiction aux différentes couches de la vidéo SVC. Ainsi, on cherche à générer un épitomé hiérarchique qui fournisse un bon compromis entre :
- un codage efficace de l'image courante (ou d'un ensemble d'images de la séquence que l'on souhaite traiter conjointement auquel appartient l'image courante) par prédiction à partir de cet épitomé hiérarchique au niveau de résolution i ;
- un codage efficace de l'image courante (ou d'un ensemble d'images de la séquence que l'on souhaite traiter conjointement auquel appartient l'image courante) par prédiction à partir de cet épitomé hiérarchique au niveau de résolution i-1 ; et
- un codage efficace de l'épitomé hiérarchique lui-même.

### A) Construction de l'épitomé

Au cours de l'étape de construction 21, le codeur construit, pour au moins une image courante le de la séquence, un épitomé hiérarchique EPH représentatif de l'image courante au niveau de résolution maximale.

Pour ce faire, le codeur génère tout d'abord un épitomé associé à la couche de rehaussement correspondant au niveau de résolution maximale i de l'image courante, noté EP(i), permettant de prédire l'image courante avec une qualité Q(i), en utilisant une technique classique de construction des épitomés, comme la technique de type maximum de vraisemblance a posteriori présentée par Q. Wang et al. dans le document « Improving Intra Coding in H.264\AVC by Image Epitome, Advances in Multimedia Information Processing »*.*

Cet épitomé EP(i) est sous-échantillonné (210), comme s'il devait être codé par le codeur SVC, pour obtenir un épitomé au niveau de résolution inférieur i-1, noté EP(i-1).

Le codeur vérifie alors (211) si un critère de codage est respecté. Par exemple, le codeur détermine un coût de codage global associé aux deux niveaux de résolution i et i-1, noté GG (i, i-1) à partir d'une estimation du coût de codage de l'épitomé hiérarchique, notée CCE, d'une estimation de la qualité de la prédiction au niveau i-1, notée Q(i-1), et de la qualité de prédiction au niveau i, notée Q(i).

Si le coût global ainsi estimé est inférieur à un seuil prédéterminé, cela signifie que la qualité de prédiction pour les différents niveaux de résolution n'est pas suffisante. Il est donc nécessaire de raffiner les épitomés obtenus aux différents niveaux de résolution.

Plus précisément, le codeur met en œuvre :
- un raffinement 212 de l'épitomé EP(i-1) obtenu au niveau de résolution inférieur i-1, délivrant un épitomé raffiné au niveau de résolution inférieure EPR(i-1), permettant de fournir une prédiction de meilleure qualité au niveau de résolution i-1 ;
- un sur-échantillonnage 213 de l'épitomé raffiné EPR(i-1) (comme s'il devait être codé par le codeur SVC) pour obtenir un nouvel épitomé au niveau de résolution supérieur, noté ER(i) ; et
- un raffinement 214 de l'épitomé ER(i), délivrant un épitomé raffiné au niveau supérieur, noté EPR(i).

Le codeur réitère ces étapes 210 à 214 tant que le critère de codage n'est pas respecté, c'est-à-dire tant que le coût global n'est pas supérieur ou égal au seuil prédéterminé. Quand cette condition est remplie, cela signifie qua la qualité de prédiction est suffisante pour les différents niveaux de résolution.

L'épitomé hiérarchique EPH obtenu à l'issue de l'étape de construction 210 correspond à l'épitomé au niveau de résolution maximale obtenu après raffinement EPR(i).

On note que les étapes de raffinement de l'épitomé (au niveau de résolution supérieur 214 ou au niveau de résolution inférieur 212) sont mises en œuvre pour améliorer la qualité de prédiction au niveau de résolution de l'épitomé. Ainsi, le raffinement de l'épitomé EP(i-1) sert à fournir une meilleure prédiction au niveau de résolution inférieur i-1.

Pour ce faire, les étapes de raffinement mettent en œuvre une suppression d'au moins une portion de l'épitomé correspondant.

Afin de déterminer la portion de l'épitomé qu'il est possible de supprimer à un niveau de résolution, on met en œuvre une prédiction de l'image courante (à reconstruire) à partir de l'épitomé non raffiné à ce niveau de résolution, et on détermine les zones de l'épitomé (blocs, pixels, ensembles de pixels) servant effectivement à la prédiction, pour ensuite supprimer les zones ne servant pas, ou peu, à la prédiction. Par exemple, on met en œuvre une prédiction de l'image courante (à reconstruire) au niveau de résolution i-1 à partir de l'épitomé EP(i-1), et on supprime les zones de l'épitomé EP(i-1) qui n'ont pas servi à la prédiction pour obtenir l'épitomé raffiné EPR(i-1). On peut utiliser pour ce faire un compteur par bloc/pixel/ensemble de pixels, et supprimer les blocs/pixels/ensemble de pixels qui n'ont pas servi ou peu servi pour la prédiction.

Dans un contexte à N niveaux de résolution, si on s'aperçoit que l'épitomé obtenu à un niveau de résolution inférieur au niveau de résolution maximale n'est pas un prédicteur de bonne qualité, il possible de raffiner cet épitomé et de remonter à un niveau de résolution supérieur, plutôt que continuer à descendre à un niveau de résolution encore inférieur.

On note que dans l'exemple décrit ci-dessus, l'épitomé hiérarchique est construit à partir d'une seule image présentant différents niveaux de résolution.

Il est également possible de construire l'épitomé hiérarchique à partir d'un ensemble d'au moins deux images de la séquence, comme proposé par les inventeurs de la présente demande dans la demande de brevet français n°1058748 déposée le 25 octobre 2010.

Pour ce faire, on choisit préalablement à l'étape de construction 21 un ensemble d'images de la séquence que l'on souhaite traiter conjointement pour construire l'épitomé hiérarchique. Il s'agit par exemple d'images appartenant à un même plan ou un même GOP (en anglais « Group Of Pictures » pour groupe d'images), que l'image courante. L'ensemble d'images utilisé pour construire l'épitomé hiérarchique peut également être une liste d'images de référence de l'image courante, définie par exemple selon les normes MPEG4 partie 10/ H.264, etc.

On détermine alors un épitomé hiérarchique pour chacune des images dudit ensemble, en utilisant la technique décrite ci-dessus, et on construit un épitomé hiérarchique « global » à partir de ces épitomés hiérarchiques, comme décrit dans la demande de brevet précitée. En variante, le codeur construit l'épitomé hiérarchique « global » en utilisant un ensemble dynamique, comme une liste d'images de référence pour l'image courante. Il est également possible de mettre à jour l'épitomé hiérarchique « global » à partir d'un épitomé hiérarchique complémentaire calculé sur la base d'une nouvelle image de l'ensemble dynamique, noté EPHc. L'épitomé hiérarchique « global » est donc calculé progressivement pour chaque nouvelle image à coder appartenant à un même plan, un même GOP, etc.

### B) Prédiction à partir de l'épitomé

L'épitomé hiérarchique obtenu à l'issue de cette étape de construction 21 est un prédicteur de bonne qualité pour les différents niveaux de résolution de l'image courante, ou de l'ensemble d'images de la séquence que l'on souhaite traiter conjointement auquel appartient l'image courante. Il peut donc être utilisé comme image de référence par le codeur pour réaliser une prédiction de l'image courante.

Ainsi, à l'issue de l'étape de construction 21, le codeur met en œuvre une prédiction 31 de l'image courante, notée Ip, à partir de l'épitomé hiérarchique EPH. Une telle prédiction peut être de type intra ou inter au sein d'une même couche, ou une prédiction inter-couches.

Par exemple, lorsque l'épitomé hiérarchique EPH est construit à partir d'une seule image présentant différents niveaux de résolution, une prédiction intra de l'image courante peut être mise en œuvre à partir de l'épitomé hiérarchique EPH. Pour ce faire, on peut appliquer une technique de type « template matching » exploitant la recherche d'un motif similaire dans l'épitomé hiérarchique EPH à partir des observations connues dans un voisinage de la zone à reconstruire. Ainsi, le bloc de l'épitomé hiérarchique qui possède le voisinage le plus proche d'un bloc de l'image courante en cours de prédiction est utilisé pour cette prédiction.

Lorsque l'épitomé hiérarchique EPH est construit à partir d'un ensemble d'images de la séquence, une prédiction inter de l'image courante peut être mise en œuvre à partir de l'épitomé hiérarchique EPH, comme décrit dans la demande de brevet français n°1058748 précitée. Pour ce faire, on applique par exemple une technique de type compensation en mouvement ou « template matching ».

Pour la compensation en mouvement, on considère que l'épitomé hiérarchique EPH ainsi construit est une image de référence, et on prédit l'image courante le à partir de vecteurs de mouvement pointant de l'image courante vers l'épitomé hiérarchique EPH (compensation en arrière) ou de l'épitomé hiérarchique EPH vers l'image courante (compensation en mouvement en avant).

Pour le « template matching », le bloc de l'épitomé hiérarchique qui possède le voisinage le plus proche d'un bloc de l'image courante en cours de prédiction est utilisé pour cette prédiction.

Une prédiction inter-couches des données peut également être réalisée à partir de l'épitomé hiérarchique.

Par exemple, lorsqu'une zone Z(i) de l'épitomé hiérarchique EPH au niveau i a servi à effectuer une prédiction (intra ou inter) d'un bloc B(i) de l'image en cours de codage au niveau i, on peut utiliser pour la prédiction du bloc intra co-localisé dans la couche (i+1), noté B(i+1), des informations de l'épitomé hiérarchique EPH au niveau (i+1) qui correspondent aux informations de l'épitomé hiérarchique EPH au niveau i dans une zone colocalisée Z(i+1).

### C) Codage et transmission de l'image

Il est ensuite possible de coder, au cours d'une étape de codage 32, le résidu de prédiction obtenu par comparaison entre l'image courante le et l'image prédite Ip.

### D) Codage et transmission de l'épitomé

L'étape de codage et transmission de l'épitomé hiérarchique 33 est facultative.

En effet, selon un premier mode de réalisation, l'épitomé hiérarchique EPH utilisé pour le codage de l'image courante le n'est pas transmis au décodeur. Cet épitomé hiérarchique est en revanche regénéré au décodeur, sur la base des images précédemment codées/décodées de la séquence et éventuellement du voisinage causal de l'image courante, en utilisant la même technique de construction qu'au codage.

Selon un deuxième mode de réalisation, l'épitomé hiérarchique EPH ou un épitomé complémentaire EPHc, utilisé pour le codage de l'image courante Ic, est transmis au décodeur. L'épitomé hiérarchique EPH ou l'épitomé complémentaire EPHc, associé au niveau de résolution maximale i, est alors encodé par le codeur SVC.

### E) Fin de l'algorithme de codage

Si l'image courante est la dernière image de la séquence d'images (test 34, le = In ?), on arrête l'algorithme de codage.

Sinon, on passe à l'image suivant l'image courante dans la séquence selon l'ordre de codage (Ic+1), et on retourne à l'étape de construction 21 de l'épitomé pour cette nouvelle image.

On note que l'étape de prédiction 31 pourrait mettre en œuvre un autre mode de codage, pour au moins une image de la séquence. En effet, on choisit pour la prédiction le mode de codage qui offre un meilleur compromis débit/distorsion, parmi l'ensemble des modes de codage préexistants et les nouveaux modes de codage basés sur l'utilisation d'un épitomé hiérarchique (en intra ou inter).

En particulier, l'étape de prédiction 31 peut mettre en œuvre un autre mode de codage pour au moins un bloc d'une image de la séquence si la prédiction est mise en œuvre bloc par bloc.

Ainsi, en variante, l'étape de prédiction 31 peut être précédée par un test permettant de déterminer si le mode de reconstruction à partir de l'épitomé hiérarchique (noté M_EPIT) est le meilleur. Si tel n'est pas le cas, l'étape de prédiction 31 peut mettre en œuvre une autre technique de prédiction.

En d'autres termes, pour chaque bloc à coder à chaque niveau de résolution du codeur SVC, on teste le mode de reconstruction utilisant une prédiction (intra ou inter) à partir de l'épitomé hiérarchique à ce niveau de résolution, et on conserve ce mode s'il est meilleur que les autres.

### 5.3 Signal représentatif de la séquence d'images

Le signal généré par le codeur peut porter différentes informations, selon que l'épitomé hiérarchique ou un épitomé hiérarchique complémentaire est transmis ou non au décodeur, pour au moins une image de la séquence.

Ainsi, par exemple, un tel signal comprend au moins un indicateur permettant de signaler qu'un épitomé hiérarchique est utilisé pour prédire une ou plusieurs images de la séquence, qu'un épitomé hiérarchique ou plusieurs épitomés hiérarchiques sont transmis dans le signal, qu'un épitomé hiérarchique complémentaire ou plusieurs épitomés hiérarchiques complémentaires sont transmis dans le signal, etc.

On note que les épitomés hiérarchiques ou épitomés hiérarchique complémentaires, qui sont des données de type image, peuvent être codés dans le signal comme des images de la séquence.

### 5.4 Fonctionnement du décodeur

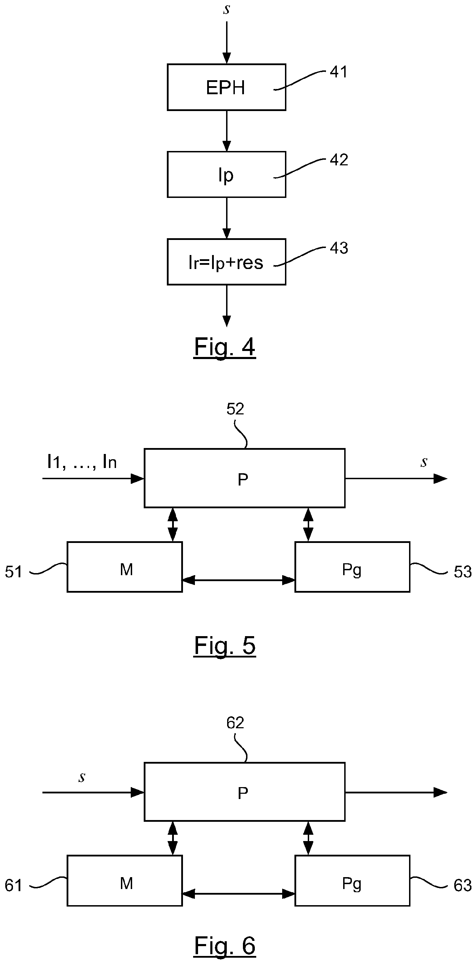

La figure 4 illustre les principales étapes mises en œuvre par un décodeur selon l'invention.

Un tel décodeur reçoit en entrée un signal s représentatif d'une séquence d'images.

Il met en œuvre une étape d'obtention 41, pour au moins une image à reconstruire Ir, d'un épitomé hiérarchique EPH associé à la couche de rehaussement correspondant au niveau de résolution maximale de l'image à reconstruire, et éventuellement d'un résidu de prédiction associé à l'image à reconstruire.

Selon un premier mode de réalisation, l'épitomé utilisé pour le codage de l'image courante le n'est pas transmis au décodeur. Par exemple, le décodeur lit dans le signal représentatif de la séquence d'image au moins un indicateur signalant qu'un épitomé hiérarchique a été utilisé pour prédire l'image à reconstruire, et que cet épitomé hiérarchique n'est pas transmis dans le signal.

L'étape d'obtention 41 met alors en œuvre une étape de construction de l'épitomé hiérarchique EPH similaire à celle mise en œuvre par le codeur, à partir d'images précédemment codées/décodées de la séquence, et éventuellement du voisinage causal de l'image à reconstruire.

Selon un deuxième mode de réalisation, l'épitomé hiérarchique EPH utilisé pour le codage de l'image courante le est transmis au décodeur. Par exemple, le décodeur lit dans le signal représentatif de la séquence d'image au moins un indicateur signalant qu'un épitomé hiérarchique a été utilisé pour prédire l'image à reconstruire, et que cet épitomé hiérarchique est transmis dans le signal.

L'étape d'obtention 41 met alors en œuvre une étape de lecture de l'épitomé hiérarchique (ou d'un épitomé hiérarchique complémentaire), dans le signal.

Une fois l'épitomé hiérarchique obtenu, le décodeur met en œuvre une prédiction 42 de l'image à reconstruire. Si l'image à reconstruire ou au moins un bloc de l'image à reconstruire ont été prédit au codage à partir de l'épitomé hiérarchique (mode M_EPIT), l'étape de prédiction 42 met en œuvre une prédiction (par compensation en mouvement, « template matching », etc) à partir de l'épitomé hiérarchique, similaire à celle mise en œuvre par le codeur précédemment décrite.

Le décodeur utilise donc l'épitomé hiérarchique comme source de prédiction alternative, permettant de réaliser les prédictions avec le niveau de qualité/résolution approprié.

Il est alors possible de reconstruire l'image Ir, au cours d'une étape de décodage 43, en ajoutant le résidu de prédiction à l'image obtenue à l'issue de l'étape de prédiction 42.

### 5.5 Structure du codeur et du décodeur

On présente finalement, en relation avec les figures 5 et 6, la structure simplifiée d'un codeur et d'un décodeur mettant respectivement en œuvre une technique de codage et une technique de décodage selon l'un des modes de réalisation décrits ci-dessus.

Par exemple, le codeur comprend une mémoire 51 comprenant une mémoire tampon M, une unité de traitement 52, équipée par exemple d'un processeur P, et pilotée par un programme d'ordinateur Pg 53, mettant en œuvre le procédé de codage selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée une séquence d'images à coder. Le processeur de l'unité de traitement 52 met en œuvre les étapes du procédé de codage décrit précédemment, selon les instructions du programme d'ordinateur 53, pour coder au moins une image courante de la séquence. Pour cela, le codeur comprend, outre la mémoire 51, des moyens de construction d'un épitomé hiérarchique associé à la couche de rehaussement correspondant au niveau de résolution maximale de l'image courante. Ces moyens sont pilotés par le processeur de l'unité de traitement 52.

Le décodeur comprend quant à lui une mémoire 61 comprenant une mémoire tampon M, une unité de traitement 62, équipée par exemple d'un processeur P, et pilotée par un programme d'ordinateur Pg 63, mettant en œuvre le procédé de décodage selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée un signal représentatif de la séquence d'images. Le processeur de l'unité de traitement 62 met en œuvre les étapes du procédé de décodage décrit précédemment, selon les instructions du programme d'ordinateur 63, pour décoder et reconstruire au moins une image de la séquence. Pour cela, le décodeur comprend, outre la mémoire 61 des moyens d'obtention d'un épitomé hiérarchique associé à la couche de rehaussement correspondant au niveau de résolution maximale de l'image à reconstruire. Ces moyens sont pilotés par le processeur de l'unité de traitement 62.

## Revendications

1. Procédé de codage d'une séquence d'images, délivrant un signal présentant une organisation en couches comprenant pour au moins une image courante de ladite séquence, au moins une couche de rehaussement et au moins une couche précédente,
la couche de rehaussement correspondant à un niveau de résolution spatiale maximale de ladite image courante, la couche précédente correspondant à un niveau de résolution spatiale de ladite image inférieur au niveau de résolution spatiale de la couche de rehaussement , la couche de rehaussement étant codée par prédiction au moins à partir de ladite au moins une couche précédente,
**caractérisé en ce qu'**il met en œuvre, pour ladite image courante, une étape de construction (21) d'un épitomé hiérarchique associé à la couche de rehaussement correspondant au niveau de résolution spatiale maximale de ladite image courante, à partir :
- d'un épitomé associé à la couche de rehaussement correspondant au niveau de résolution spatiale maximale de ladite image courante ; et
- d'au moins un épitomé associé à une couche précédente correspondant à un niveau de résolution spatiale inférieur audit niveau de résolution spatiale maximale de ladite image courante,
ledit épitomé hiérarchique étant utilisé pour la prédiction intra-couches ou inter-couches de l'image courante.

2. Procédé de codage selon la revendication 1, **caractérisé en ce que** ladite étape de construction (21) met en œuvre au moins une itération des étapes suivantes :
- au moins un sous-échantillonnage (210) d'un épitomé associé à une couche correspondant à un niveau de résolution spatiale supérieure, de façon à obtenir un épitomé associé à une couche correspondant à un niveau de résolution spatiale inférieure ;
- vérification (211) d'un critère de codage :
∘ si ledit critère de codage n'est pas atteint :
▪ raffinement (212) dudit épitomé associé à la couche correspondant audit niveau de résolution spatiale inférieure, délivrant un épitomé raffiné au niveau de résolution spatiale inférieure ;
▪ sur-échantillonnage (213) dudit épitomé raffiné associé à la couche correspondant au niveau de résolution spatiale inférieure, délivrant un nouvel épitomé associé à la couche correspondant au niveau de résolution spatiale supérieure ;
▪ raffinement (214) dudit épitomé associé à la couche correspondant au niveau de résolution spatiale supérieure ;
▪ itération des étapes de sous-échantillonnage (210) dudit épitomé associé à la couche correspondant au niveau de résolution spatiale supérieure, raffinement (212) dudit épitomé associé à la couche correspondant audit niveau de résolution spatiale inférieure, sur-échantillonnage (213) dudit épitomé raffiné associé à la couche correspondant au niveau de résolution spatiale inférieure, raffinement (214) dudit épitomé associé à la couche correspondant au niveau de résolution spatiale supérieure, tant que le critère de codage n'est pas atteint,
∘ si ledit critère de codage est atteint :
▪ obtention dudit épitomé hiérarchique, correspondant audit épitomé associé à la couche correspondant au niveau de résolution spatiale maximale obtenu après raffinement, et arrêt des itérations ;
où, pour la première itération, le niveau de résolution spatiale supérieure est le niveau de résolution spatiale maximale.

3. Procédé de codage selon la revendication 2, **caractérisé en ce que** ladite étape de raffinement (212, 214) met en œuvre une suppression d'au moins une portion dudit épitomé.

4. Procédé de codage selon la revendication 2, **caractérisé en ce que** ledit critère de codage tient compte d'une qualité de prédiction associée aux différents niveaux de résolution spatiale et d'un coût de codage dudit épitomé hiérarchique.

5. Procédé de codage selon la revendication 1, **caractérisé en ce qu'**il comprend une étape de transmission dudit épitomé hiérarchique à au moins un décodeur destiné à décoder ladite séquence d'images.

6. Procédé de codage selon la revendication 1, **caractérisé en ce que** ledit épitomé hiérarchique est déterminé à partir d'un ensemble d'au moins deux images de ladite séquence.

7. Dispositif de codage d'une séquence d'images, délivrant un signal présentant une organisation en couches comprenant pour au moins une image courante de ladite séquence, au moins une couche de rehaussement et au moins une couche précédente,
la couche de rehaussement correspondant à un niveau de résolution spatiale maximale de ladite image courante, la couche précédente correspondant à un niveau de résolution spatiale de ladite image inférieur au niveau de résolution spatiale de la couche de rehaussement, la couche de rehaussement étant codée par prédiction au moins à partir de ladite au moins une couche précédente,
**caractérisé en ce qu'**il comprend, pour ladite image courante, des moyens de construction (21) d'au moins un épitomé hiérarchique associé à la couche de rehaussement correspondant au niveau de résolution spatiale maximale d'au moins une image courante de ladite séquence, à partir :
- d'un épitomé associé à la couche de rehaussement correspondant au niveau de résolution spatiale maximale de ladite image courante ; et
- d'au moins un épitomé associé à une couche précédente correspondant à un niveau de résolution spatiale inférieur audit niveau de résolution spatiale maximale de ladite image courante,
ledit épitomé hiérarchique étant utilisé pour la prédiction intra-couches ou inter-couches de l'image courante.

8. Signal représentatif d'une séquence d'images codée selon le procédé de codage de la revendication 1, présentant une organisation en couches comprenant pour au moins une image courante de ladite séquence, au moins une couche de rehaussement et au moins une couche précédente,
la couche de rehaussement correspondant à un niveau de résolution spatiale maximale de ladite image courante, la couche précédente correspondant à un niveau de résolution spatiale de ladite image inférieur au niveau de résolution spatiale de la couche de rehaussement, la couche de rehaussement étant codée par prédiction au moins à partir de ladite au moins une couche précédente,
**caractérisé en ce qu'**un épitomé hiérarchique associé à la couche de rehaussement correspondant au niveau de résolution spatiale maximale d'au moins une image courante de ladite séquence est construit à partir :
- d'un épitomé associé à la couche de rehaussement correspondant au niveau de résolution spatiale maximale de ladite image courante ; et
- d'au moins un épitomé associé à une couche précédente correspondant à un niveau de résolution spatiale inférieur audit niveau de résolution spatiale maximale de ladite image courante,
ledit épitomé hiérarchique étant utilisé pour la prédiction intra-couches ou inter-couches de l'image courante ;
ledit signal porte au moins un indicateur signalant une utilisation dudit épitomé hiérarchique pour prédire ladite image courante et/ou une présence dudit épitomé hiérarchique dans ledit signal.

9. Procédé de décodage d'un signal représentatif d'une séquence d'images, ledit signal présentant une organisation en couches comprenant, pour au moins une image à reconstruire de ladite séquence, au moins une couche de rehaussement et au moins une couche précédente,
la couche de rehaussement correspondant à un niveau de résolution spatiale maximale de ladite image à reconstruire, la couche précédente correspondant à un niveau de résolution spatiale de ladite image inférieur au niveau de résolution spatiale de la couche de rehaussement, la couche de rehaussement étant codée par prédiction au moins à partir de ladite au moins une couche précédente,
**caractérisé en ce qu'**il met en œuvre, pour au moins une image à reconstruire de ladite séquence, une étape d'obtention (41) d'un épitomé hiérarchique associé à la couche de rehaussement correspondant au niveau de résolution spatiale maximale de ladite image à reconstruire,
ledit épitomé hiérarchique étant construit au codage à partir :
- d'un épitomé associé à la couche de rehaussement correspondant au niveau de résolution spatiale maximale de ladite image à reconstruire; et
- d'au moins un épitomé associé à une couche précédente correspondant à un niveau de résolution spatiale inférieur audit niveau de résolution spatiale maximale de ladite image à reconstruire,
et lu dans ledit signal,
ou bien étant reconstruit au décodage, ledit épitomé hiérarchique étant utilisé pour la prédiction intra-couches ou inter-couches de l'image à reconstruire.

10. Dispositif de décodage d'un signal représentatif d'une séquence d'images, ledit signal présentant une organisation en couches comprenant, pour au moins une image à reconstruire de ladite séquence, au moins une couche de rehaussement et au moins une couche précédente,
la couche de rehaussement correspondant à un niveau de résolution spatiale maximale de ladite image à reconstruire, la couche précédente correspondant à un niveau de résolution spatiale de ladite image inférieur au niveau de résolution spatiale de la couche de rehaussement, la couche de rehaussement étant codée par prédiction au moins à partir de ladite au moins une couche précédente,
**caractérisé en ce qu'**il comprend des moyens d'obtention (41) d'au moins un épitomé hiérarchique associé à la couche de rehaussement correspondant au niveau de résolution spatiale maximale d'au moins une image à reconstruire de ladite séquence,
ledit épitomé hiérarchique étant construit au codage à partir :
- d'un épitomé associé à la couche de rehaussement correspondant au niveau de résolution spatiale maximale de ladite image à reconstruire; et
- d'au moins un épitomé associé à une couche précédente correspondant à un niveau de résolution spatiale inférieur audit niveau de résolution spatiale maximale de ladite image à reconstruire,
et lu dans le signal, ou bien étant reconstruit au décodage, ledit épitomé hiérarchique étant utilisé pour la prédiction intra-couches ou inter-couches de l'image à reconstruire.

11. Programme d'ordinateur comportant des instructions pour la mise en œuvre d'un procédé de codage d'une séquence d'images selon la revendication 1, lorsque ce programme est exécuté par un processeur.

12. Programme d'ordinateur comportant des instructions pour la mise en œuvre d'un procédé de décodage d'un signal représentatif d'une séquence d'images selon la revendication 9, lorsque ce programme est exécuté par un processeur.

## Patentansprüche

1. Verfahren zur Codierung einer Bildfolge, das ein Signal liefert, das eine Schichtenstruktur aufweist, die für mindestens ein aktuelles Bild der Folge mindestens eine Verstärkungsschicht und mindestens eine vorhergehende Schicht aufweist, wobei die Verstärkungsschicht einem Grad maximaler räumlicher Auflösung des aktuellen Bilds entspricht, wobei die vorhergehende Schicht einem Grad räumlicher Auflösung des Bilds niedriger als der Grad räumlicher Auflösung der Verstärkungsschicht entspricht, wobei die Verstärkungsschicht durch Vorhersage mindestens ausgehend von der mindestens einen vorhergehenden Schicht codiert wird,
**dadurch gekennzeichnet, dass** es für das aktuelle Bild einen Schritt der Konstruktion (21) eines hierarchischen Epitoms durchführt, das der dem Grad maximaler räumlicher Auflösung des aktuellen Bilds entsprechenden Verstärkungsschicht zugeordnet ist, ausgehend von:
- einem der dem Grad maximaler räumlicher Auflösung des aktuellen Bilds entsprechenden Verstärkungsschicht zugeordneten Epitom; und
- mindestens einem einer einem Grad räumlicher Auflösung niedriger als der Grad maximaler räumlicher Auflösung des aktuellen Bilds entsprechenden vorhergehenden Schicht zugeordneten Epitom,
wobei das hierarchische Epitom für die Intraschichten- oder Interschichten-Vorhersage des aktuellen Bilds verwendet wird.

2. Codierverfahren nach Anspruch 1, **dadurch gekennzeichnet, dass** der Konstruktionsschritt (21) mindestens eine Iteration der folgenden Schritte durchführt:
- mindestens eine Unterabtastung (210) eines einer einem Grad höherer räumlicher Auflösung entsprechenden Schicht zugeordneten Epitoms, um ein einer einem Grad niedrigerer räumlicher Auflösung entsprechenden Schicht zugeordnetes Epitom zu erhalten;
- Überprüfung (211) eines Codierkriteriums:
∘ wenn das Codierkriterium nicht erreicht wird:
• Verfeinerung (212) des der dem Grad niedrigerer räumlicher Auflösung entsprechenden Schicht zugeordneten Epitoms, was ein verfeinertes Epitom bei dem Grad niedrigerer räumlicher Auflösung liefert;
• Überabtastung (213) des der dem Grad niedrigerer räumlicher Auflösung entsprechenden Schicht zugeordneten verfeinerten Epitoms, was ein der dem Grad höherer räumlicher Auflösung entsprechenden Schicht zugeordnetes neues Epitom liefert;
• Verfeinerung (214) des der dem Grad höherer räumlicher Auflösung entsprechenden Schicht zugeordneten Epitoms;
• Iteration der Schritte der Unterabtastung (210) des der dem Grad höherer räumlicher Auflösung entsprechenden Schicht zugeordneten Epitoms, der Verfeinerung (212) des der dem Grad niedrigerer räumlicher Auflösung entsprechenden Schicht zugeordneten Epitoms, der Überabtastung (213) des der dem Grad niedrigerer räumlicher Auflösung entsprechenden Schicht zugeordneten verfeinerten Epitoms, Verfeinerung (214) des der dem Grad höherer räumlicher Auflösung entsprechenden Schicht zugeordneten Epitoms, so lange des Codierkriterium nicht erreicht ist,
∘ wenn das Codierkriterium erreicht ist:
• Erhalt des hierarchischen Epitoms entsprechend dem der dem Grad maximaler räumlicher Auflösung entsprechenden Schicht zugeordneten Epitom, das nach Verfeinerung erhalten wird, und Beenden der Iterationen;
wobei für die erste Iteration der Grad höherer räumlicher Auflösung der Grad maximaler räumlicher Auflösung ist.

3. Codierverfahren nach Anspruch 2, **dadurch gekennzeichnet, dass** der Verfeinerungsschritt (212, 214) eine Unterdrückung mindestens eines Teils des Epitoms durchführt.

4. Codierverfahren nach Anspruch 2, **dadurch gekennzeichnet, dass** das Codierkriterium eine den verschiedenen Graden räumlicher Auflösung zugeordnete Vorhersagequalität und Codierkosten des hierarchischen Epitom berücksichtigt.

5. Codierverfahren nach Anspruch 1, **dadurch gekennzeichnet, dass** es einen Schritt der Übertragung des hierarchischen Epitoms an mindestens einen Decodierer enthält, der dazu bestimmt ist, die Bildfolge zu decodieren.

6. Codierverfahren nach Anspruch 1, **dadurch gekennzeichnet, dass** das hierarchische Epitom ausgehend von einer Einheit von mindestens zwei Bildern der Folge bestimmt wird.

7. Vorrichtung zur Codierung einer Bildfolge, die ein Signal liefert, das eine Schichtenstruktur aufweist, die für mindestens ein aktuelles Bild der Folge mindestens eine Verstärkungsschicht und mindestens eine vorhergehenden Schicht enthält,
wobei die Verstärkungsschicht einem Grad maximaler räumlicher Auflösung des aktuellen Bilds entspricht, die vorhergehende Schicht einem Grad räumlicher Auflösung des Bilds niedriger als der Grad räumlicher Auflösung der Verstärkungsschicht entspricht, die Verstärkungsschicht durch Vorhersage mindestens ausgehend von der mindestens einen vorhergehenden Schicht codiert wird,
**dadurch gekennzeichnet, dass** sie für das aktuelle Bild Einrichtungen zur Konstruktion (21) mindestens eines hierarchischen Epitoms enthält, das der dem Grad maximaler räumlicher Auflösung mindestens eines aktuellen Bilds der Folge entsprechenden Verstärkungsschicht zugeordnet ist, ausgehend von:
- einem der dem Grad maximaler räumlicher Auflösung des aktuellen Bilds entsprechenden Verstärkungsschicht zugeordnetes Epitom; und
- mindestens einem einer einem Grad räumlicher Auflösung niedriger als der Grad maximaler räumlicher Auflösung des aktuellen Bilds entsprechenden vorhergehenden Schicht zugeordneten Epitom,
wobei das hierarchische Epitom zur Intraschichten- oder Interschichten-Vorhersage des aktuellen Bilds verwendet wird.

8. Signal, das für eine gemäß dem Codierverfahren des Anspruchs 1 codierte Bildfolge repräsentativ ist, das eine Schichtenstruktur aufweist, die für mindestens ein aktuelles Bild der Folge mindestens eine Verstärkungsschicht und mindestens eine vorhergehende Schicht enthält,
wobei die Verstärkungsschicht einem Grad maximaler räumlicher Auflösung des aktuellen Bilds entspricht, die vorhergehende Schicht einem Grad räumlicher Auflösung des Bilds niedriger als der Grad räumlicher Auflösung der Verstärkungsschicht entspricht, wobei die Verstärkungsschicht durch Vorhersage mindestens ausgehend von der mindestens einen vorhergehenden Schicht codiert wird,
**dadurch gekennzeichnet, dass** ein der dem Grad maximaler räumlicher Auflösung mindestens eines aktuellen Bilds der Folge entsprechenden Verstärkungsschicht zugeordnetes hierarchisches Epitom konstruiert wird ausgehend von:
- einem der dem Grad maximaler räumlicher Auflösung des aktuellen Bilds entsprechenden Verstärkungsschicht zugeordneten Epitom; und
- mindestens einem einer einem Grad räumlicher Auflösung niedriger als der Grad maximaler räumlicher Auflösung des aktuellen Bilds entsprechenden vorhergehenden Schicht zugeordneten Epitom;
wobei das hierarchische Epitom zur Intraschichten- oder Interschichten-Vorhersage des aktuellen Bilds verwendet wird;
das Signal mindestens einen Indikator trägt, der eine Verwendung des hierarchischen Epitoms zur Vorhersage des aktuellen Bilds und/oder ein Vorhandensein des hierarchischen Epitoms im Signal anzeigt.

9. Decodierverfahren eines für eine Bildfolge repräsentativen Signals, wobei das Signal eine Schichtenstruktur aufweist, die für mindestens ein zu rekonstruierendes Bild der Folge mindestens eine Verstärkungsschicht und mindestens eine vorhergehende Schicht enthält,
wobei die Verstärkungsschicht einem Grad maximaler räumlicher Auflösung des zu rekonstruierenden Bilds entspricht, die vorhergehenden Schicht einem Grad räumlicher Auflösung des Bilds niedriger als der Grad räumlicher Auflösung der Verstärkungsschicht entspricht, wobei die Verstärkungsschicht durch Vorhersage mindestens ausgehend von der mindestens einen vorhergehenden Schicht codiert wird,
**dadurch gekennzeichnet, dass** es für mindestens ein zu rekonstruierendes Bild der Folge einen Schritt des Erhalts (41) eines der dem Grad maximaler räumlicher Auflösung des zu rekonstruierenden Bilds entsprechenden Verstärkungsschicht zugeordneten hierarchischen Epitoms durchführt, wobei das hierarchische Epitom bei der Codierung konstruiert wird ausgehend von:
- einem der dem Grad maximaler räumlicher Auflösung des zu rekonstruierenden Bilds entsprechenden Verstärkungsschicht zugeordneten Epitom; und
- mindestens einem einer einem Grad räumlicher Auflösung niedriger als der Grad maximaler räumlicher Auflösung des zu rekonstruierenden Bilds entsprechenden vorhergehenden Schicht zugeordneten Epitom,
und gelesen im Signal,
oder bei der Decodierung rekonstruiert wird, wobei das hierarchische Epitom für die Intraschichten- oder Interschichten-Vorhersage des zu rekonstruierenden Bilds verwendet wird.

10. Decodiervorrichtung eines für eine Bildfolge repräsentativen Signals, wobei das Signal eine Schichtenstruktur aufweist, die für mindestens ein zu rekonstruierendes Bild der Folge mindestens eine Verstärkungsschicht und mindestens eine vorhergehende Schicht enthält,
wobei die Verstärkungsschicht einem Grad maximaler räumlicher Auflösung des zu rekonstruierenden Bilds entspricht, die vorhergehenden Schicht einem Grad räumlicher Auflösung des Bilds niedriger als der Grad räumlicher Auflösung der Verstärkungsschicht entspricht, die Verstärkungsschicht durch Vorhersage mindestens ausgehend von der mindestens einen vorhergehenden Schicht codiert wird,
**dadurch gekennzeichnet, dass** sie Einrichtungen zum Erhalt (41) mindestens eines der dem Grad maximaler räumlicher Auflösung mindestens eines zu rekonstruierenden Bilds der Folge entsprechenden Verstärkungsschicht zugeordneten hierarchischen Epitoms enthält,
wobei das hierarchische Epitom beim Codieren konstruiert wird ausgehend von:
- einem der dem Grad maximaler räumlicher Auflösung des zu rekonstruierenden Bilds entsprechenden Verstärkungsschicht zugeordneten Epitom; und
- mindestens einem einer einem Grad räumlicher Auflösung niedriger als der Grad maximaler räumlicher Auflösung des zu rekonstruierenden Bilds entsprechenden vorhergehenden Schicht zugeordneten Epitom,
und gelesen in dem Signal,
oder bei der Decodierung rekonstruiert wird, wobei das hierarchische Epitom für die Intraschichten- oder Interschichten-Vorhersage des zu rekonstruierenden Bilds verwendet wird.

11. Computerprogramm, das Anweisungen zur Durchführung eines Codierverfahrens einer Bildfolge nach Anspruch 1 aufweist, wenn dieses Programm von einem Prozessor ausgeführt wird.

12. Computerprogramm, das Anweisungen zur Durchführung eines Decodierverfahrens eines für eine Bildfolge repräsentativen Signals nach Anspruch 9 aufweist, wenn dieses Programm von einem Prozessor ausgeführt wird.

## Claims

1. Method for coding a sequence of images, delivering a signal having a layered organization comprising, for at least one current image of said sequence, at least one enhancement layer and at least one preceding layer, the enhancement layer corresponding to a level of maximum spatial resolution of said current image, the preceding layer corresponding to a level of spatial resolution of said image that is lower than the level of spatial resolution of the enhancement layer, the enhancement layer being coded by prediction at least on the basis of said at least one preceding layer, **characterized in that** it implements, for said current image, a step (21) of constructing a hierarchical epitome associated with the enhancement layer corresponding to the level of maximum spatial resolution of said current image, from:
- an epitome associated with the enhancement layer corresponding to the level of maximum spatial resolution of said current image; and
- at least one epitome associated with a preceding layer corresponding to a level of spatial resolution that is lower than said level of maximum spatial resolution of said current image,
said hierarchical epitome being used for the intra-layer or inter-layer prediction of the current image.

2. Coding method according to Claim 1, **characterized in that** said constructing step (21) implements at least one iteration of the following steps:
- under-sampling (210) at least once an epitome associated with a layer corresponding to a level of higher spatial resolution, so as to obtain an epitome associated with a layer corresponding to a level of lower spatial resolution;
- verifying (211) a coding criterion:
∘ if said coding criterion is not met:
▪ refining (212) said epitome associated with the layer corresponding to said level of lower spatial resolution, delivering a refined epitome at the level of lower spatial resolution;
▪ over-sampling (213) said refined epitome associated with the layer corresponding to the level of lower spatial resolution, delivering a new epitome associated with the layer corresponding to the level of higher spatial resolution;
▪ refining (214) said epitome associated with the layer corresponding to the level of higher spatial resolution;
▪ iterating the steps (210) of under-sampling said epitome associated with the layer corresponding to the level of higher spatial resolution, of refining (212) said epitome associated with the layer corresponding to said level of lower spatial resolution, of over-sampling (213) said refined epitome associated with the layer corresponding to the level of lower spatial resolution, and of refining (214) said epitome associated with the layer corresponding to the level of higher spatial resolution, until the coding criterion is met,
∘ if said coding criterion is met:
▪ obtaining said hierarchical epitome, the latter corresponding to said epitome associated with the layer corresponding to the level of maximum spatial resolution that is obtained after refining, and stopping the iterations;
where, for the first iteration, the level of higher spatial resolution is the level of maximum spatial resolution.

3. Coding method according to Claim 2, **characterized in that** said refining step (212, 214) implements a deletion of at least one segment of said epitome.

4. Coding method according to Claim 2, **characterized in that** said coding criterion takes into account a prediction quality associated with the various levels of spatial resolution and a cost of coding said hierarchical epitome.

5. Coding method according to Claim 1, **characterized in that** it comprises a step of transmitting said hierarchical epitome to at least one decoder intended to decode said sequence of images.

6. Coding method according to Claim 1, **characterized in that** said hierarchical epitome is determined on the basis of a set of at least two images of said sequence.

7. Device for coding a sequence of images, delivering a signal having a layered organization comprising, for at least one current image of said sequence, at least one enhancement layer and at least one preceding layer, the enhancement layer corresponding to a level of maximum spatial resolution of said current image, the preceding layer corresponding to a level of spatial resolution of said image that is lower than the level of spatial resolution of the enhancement layer, the enhancement layer being coded by prediction at least on the basis of said at least one preceding layer, **characterized in that** it comprises, for said current image, means (21) for constructing at least one hierarchical epitome associated with the enhancement layer corresponding to the level of maximum spatial resolution of at least one current image of said sequence, from:
- an epitome associated with the enhancement layer corresponding to the level of maximum spatial resolution of said current image; and
- at least one epitome associated with a preceding layer corresponding to a level of spatial resolution that is lower than said level of maximum spatial resolution of said current image,
said hierarchical epitome being used for the intra-layer or inter-layer prediction of the current image.

8. Signal representative of a sequence of images that is coded using the coding method of Claim 1, having a layered organization comprising, for at least one current image of said sequence, at least one enhancement layer and at least one preceding layer,
the enhancement layer corresponding to a level of maximum spatial resolution of said current image, the preceding layer corresponding to a level of spatial resolution of said image that is lower than the level of spatial resolution of the enhancement layer, the enhancement layer being coded by prediction at least on the basis of said at least one preceding layer,
**characterized in that** a hierarchical epitome associated with the enhancement layer corresponding to the level of maximum spatial resolution of at least one current image of said sequence is constructed from:
- an epitome associated with the enhancement layer corresponding to the level of maximum spatial resolution of said current image; and
- at least one epitome associated with a preceding layer corresponding to a level of spatial resolution that is lower than said level of maximum spatial resolution of said current image,
said hierarchical epitome being used for the intra-layer or inter-layer prediction of the current image, said signal bearing at least one indicator signalling a use of said hierarchical epitome to predict said current image and/or a presence of said hierarchical epitome in said signal.

9. Method for decoding a signal representative of a sequence of images, said signal having a layered organization comprising, for at least one image to be reconstructed of said sequence, at least one enhancement layer and at least one preceding layer,
the enhancement layer corresponding to a level of maximum spatial resolution of said image to be reconstructed, the preceding layer corresponding to a level of spatial resolution of said image that is lower than the level of spatial resolution of the enhancement layer, the enhancement layer being coded by prediction at least on the basis of said at least one preceding layer,
**characterized in that** it implements, for at least one image to be reconstructed of said sequence, a step (41) of obtaining a hierarchical epitome associated with the enhancement layer corresponding to the level of maximum spatial resolution of said image to be reconstructed, said hierarchical epitome being constructed on coding from:
- an epitome associated with the enhancement layer corresponding to the level of maximum spatial resolution of said image to be reconstructed; and
- at least one epitome associated with a preceding layer corresponding to a level of spatial resolution that is lower than said level of maximum spatial resolution of said image to be reconstructed,
and read from said signal,
or indeed being reconstructed on decoding, said hierarchical epitome being used for the intra-layer or inter-layer prediction of the image to be reconstructed.

10. Device for decoding a signal representative of a sequence of images, said signal having a layered organization comprising, for at least one image to be reconstructed of said sequence, at least one enhancement layer and at least one preceding layer,
the enhancement layer corresponding to a level of maximum spatial resolution of said image to be reconstructed, the preceding layer corresponding to a level of spatial resolution of said image that is lower than the level of spatial resolution of the enhancement layer, the enhancement layer being coded by prediction at least on the basis of said at least one preceding layer,
**characterized in that** it comprises means (41) for obtaining at least one hierarchical epitome associated with the enhancement layer corresponding to the level of maximum spatial resolution of at least one image to be reconstructed of said sequence,
said hierarchical epitome being constructed on coding from:
- an epitome associated with the enhancement layer corresponding to the level of maximum spatial resolution of said image to be reconstructed; and
- at least one epitome associated with a preceding layer corresponding to a level of spatial resolution that is lower than said level of maximum spatial resolution of said image to be reconstructed,
and read from the signal,
or indeed being reconstructed on decoding, said hierarchical epitome being used for the intra-layer or inter-layer prediction of the image to be reconstructed.

11. Computer program containing instructions for implementing a method for coding a sequence of images according to Claim 1, when this program is executed by a processor.

12. Computer program containing instructions for implementing a method for decoding a signal representative of a sequence of images according to Claim 9, when this program is executed by a processor.
